Europäisches Patentamt

(19) European Patent Office

Office européen des brevets

(11) Numéro de publication: **0 196 934**
**B1**

(12) **FASCICULE DE BREVET EUROPEEN**

(45) Date de publication du fascicule du brevet:
02.11.89

(21) Numéro de dépôt: **86400382.7**

(22) Date de dépôt: **21.02.86**

(51) Int. Cl.⁴: **H02M 3/335**

(54) Circuit de commande d'alimentation à découpage à applications variées.

(30) Priorité: **26.02.85 FR 8502770**

(43) Date de publication de la demande:
**08.10.86 Bulletin 86/41**

(45) Mention de la délivrance du brevet:
**02.11.89 Bulletin 89/44**

(84) Etats contractants désignés:
**DE FR GB IT NL**

(56) Documents cités:
**EP-A- 0 144 754**
**US-A- 4 195 335**
**US-A- 4 400 767**

**EDN ELECTRICAL DESIGN NEWS, vol. 29, no. 18.**
**septembre 1984, pages 213-220, Boston,**
**Massachusetts, US; G. GATTAVARI: "Design custom**
**power sources with switching-regulator chip"**

(73) Titulaire: **THOMSON-CSF, 51, Esplanade du Général de Gaulle, F-92800 Puteaux(FR)**

(72) Inventeur: **Van den Driessche, Michel, THOMSON-CSF SCPI 19, Avenue de Messine, F-75008 Paris(FR)**

(74) Mandataire: **Rinuy, Santarelli, 14, avenue de la Grande Armée, F-75017 Paris(FR)**

## Description

La présente invention concerne les alimentations stabilisées dites alimentations à découpage.

Une alimentation à découpage fonctionne de la manière suivante : un enroulement primaire de transformateur reçoit un courant qui est par exemple issu d'un pont de redresseurs recevant l'énergie du réseau alternatif. Le courant dans le transformateur est haché par un commutateur (par exemple un transistor de puissance) placé en série avec l'enroulement primaire.

Un circuit de commande du transistor établit des créneaux périodiques de mise en conduction du transistor. Pendant la durée du créneau le passage du courant est autorisé ; en dehors du créneau, le passage du courant est interdit.

Sur un (ou plusieurs) enroulement secondaire du transformateur, on recueille alors une tension alternative. Celle-ci est redressée et filtrée pour aboutir à une tension continue qui est la tension continue de sortie de l'alimentation à découpage.

Pour stabiliser la valeur de cette tension continue, on agit sur le rapport cyclique de conduction périodique du commutateur, c'est-à-dire sur le rapport entre la durée de conduction et la durée de blocage dans une période de découpage.

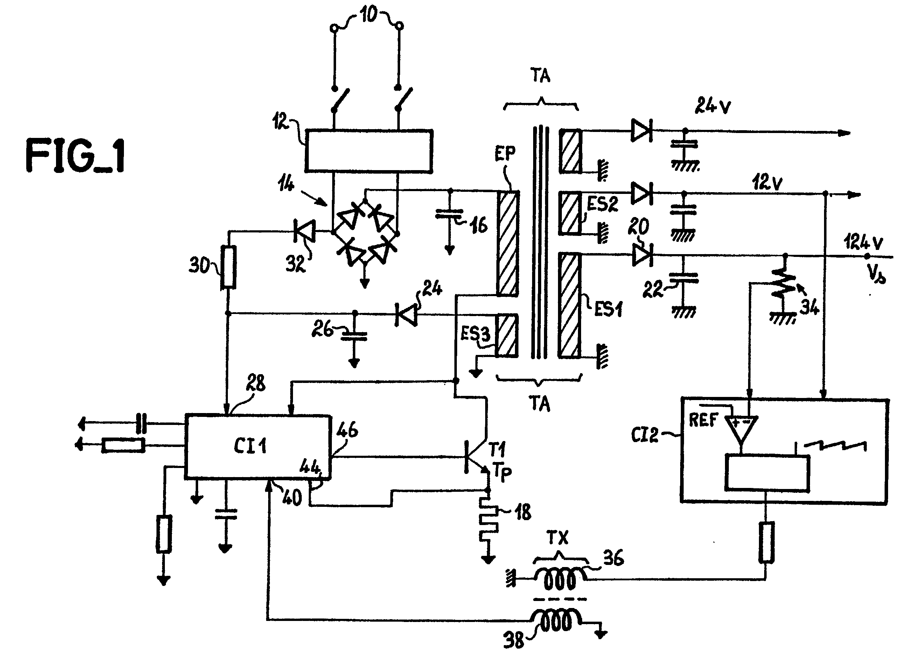

Dans une architecture d'alimentation à découpage proposée par la Demanderesse et représentée à la figure 1, deux circuits intégrés sont utilisés. L'un des circuits, CI1, sert à commander la base d'un transistor de puissance Tp pour lui appliquer des signaux périodiques de commande de mise en conduction et de commande de blocage. Ce circuit de commande de base CI1 est placé du côté de l'enroulement primaire (EP) du transformateur (TA) pour des raisons que l'on comprendra mieux dans la suite de la description. L'autre circuit intégré, circuit de régulation CI2, est au contraire placé du côté du secondaire (enroulement ES1) et il sert à examiner la tension de sortie Vs de l'alimentation pour élaborer des signaux de régulation qu'il transmet au premier circuit intégré à travers un petit transformateur TX. Le premier circuit intégré CI1 utilise ces signaux de régulation pour modifier le rapport cyclique de mise en conduction du transistor de commutation Tp et ainsi réguler la tension de sortie Vs de l'alimentation.

De nombreux problèmes sont à prendre en compte lors de la conception d'une alimentation à découpage, et notamment des problèmes de sécurité en cas de surtensions ou de surintensités, des problèmes de démarrage de l'alimentation, des problèmes de consommation dans les modes dits de "veille" où l'alimentation ne doit fournir qu'une puissance réduite ou nulle. Ces différents problèmes sont difficiles à résoudre simultanément.

De plus les fabricants d'alimentation à découpage et les utilisateurs de ces alimentations ont bien souvent des désirs variés et contradictoires en ce qui concerne les solutions à ces problèmes. Certains s'attachent tout particulièrement à éviter (pour des raisons de coût) de prévoir un transformateur d'alimentation spécifique pour alimenter le circuit de régulation CI2 dès la mise sous tension de l'alimentation. Il en résulte la nécessité de prévoir un système de démarrage automatique du circuit intégré de commande de base même en l'absence de signaux de régulation issus du circuit de régulation. D'autres au contraire tiennent essentiellement, pour des raisons de fiabilité de fonctionnement, à utiliser un transformateur auxiliaire pour l'alimentation du circuit de régulation, et s'en servent d'ailleurs aussi par exemple pour alimenter des fonctions auxiliaires consommant peu d'énergie (mode de "veille" lorsque l'alimentation à découpage ne fonctionne pas) ; il apparait alors préférable pour ces utilisateurs (pour des raisons de fiabilité notamment) que l'alimentation à découpage ne fonctionne pas du tout lorsqu'on est en mode de veille.

Dans d'autres cas encore, les utilisateurs souhaitent qu'en cas d'anomalie de fonctionnement (surtension, surintensité, etc) le découpage s'arrête et que l'alimentation ne se remette en route que lors d'une remise sous tension.

Ces contraintes sont contradictoires et doivent conduire normalement à concevoir un circuit intégré de commande de base et un circuit intégré de régulation spécifique pour chaque type d'application. Il en résulte des coûts de conception et des coûts de fabrication élevés qui se répercutent sur le coût des appareils utilisant ces alimentations à découpage.

A titre d'exemple, le brevet US 4 400 767 décrit un circuit de régulation qui se préoccupe du problème de démarrage mais pas des problèmes de mode de veille.

La présente invention propose un nouveau circuit intégré de commande de base dont l'architecture et le fonctionnement sont conçus pour permettre l'utilisation de ce circuit dans des applications aussi différentes et contradictoires que celles indiquées ci-dessus, sans que cette architecture conduise à une augmentation du nombre de bornes d'accès du circuit intégré (par rapport à ce qui serait nécessaire dans l'une ou l'autre des applications envisagées), ou à une augmentation appréciable de surface (donc de coût) du circuit intégré.

Le circuit intégré de commande de base selon la présente invention est destiné à recevoir des signaux périodiques de commande de régulation, et à fournir des créneaux de commande de mise en conduction d'un commutateur en série avec l'enroulement primaire d'un transformateur, les signaux de commande de régulation étant engendrés par un circuit alimenté en énergie à partir d'un enroulement secondaire du transformateur et étant transmis au circuit intégré de commande de base par l'intermédiaire d'un élément de transmission sans couplage galvanique. Le circuit de commande de base est caractérisé par l'architecture et le mode opératoire suivants: il comprend une borne d'entrée pour les signaux de commande de régulation, et des moyens pour:

– pendant une phase initiale de démarrage suivant la mise sous tension du circuit, élaborer des créneaux de commande de mise en conduction du commutateur indépendamment de la présence de signaux de régulation sur la borne d'entrée,

– après une phase de démarrage, élaborer des créneaux de mise en conduction synchronisés par les signaux de régulation lorsque ces signaux sont présents sur la borne d'entrée,
- interrompre les créneaux de commande synchronisés lors de la disparition des signaux de régulation,
- élaborer à nouveau des créneaux de commande synchronisés de mise en conduction lors de la réapparition de signaux de régulation après une disparition.

Les créneaux à nouveau élaborés après une disparition sont soit directement synchronisés sur les signaux de régulation réapparus, soit d'abord non synchronisés et éventuellement soumis à une croissance progressive pendant une phase de démarrage analogue à celle qui suit une remise sous tension.

Dans ces conditions, il devient possible:

1) de prévoir un démarrage automatique lors de la mise sous tension, avec ou sans transformateur auxiliaire,
2) de prévoir que ce démarrage soit progressif,
3) de prévoir très facilement un arrêt total de l'alimentation en cas de constatation d'une anomalie de fonctionnement (surtension, surintensité) du côté du secondaire du transformateur principal, ou du côté du primaire;
4) de prévoir un arrêt total de l'alimentation en mode de veille (par exemple un arrêt télécommandé) s'il y a un transformateur auxiliaire ou au contraire de prévoir que le fonctionnement continue avec une réduction de la puissance transmise s'il n'y a pas de transformateur auxiliaire.

Ces différentes fonctions peuvent être accomplies avec un unique circuit intégré de commande de base relié au circuit de régulation du secondaire uniquement par un élément de transmission avec découplage galvanique.

D'autre caractéristiques et avantages de l'invention apparaîtront à la lecture de la description détaillée qui suit et qui est faite en référence aux dessins annexés dans lesquels:

- la figure 1 déjà décrite représente l'architecture de base d'une alimentation à découpage utilisant le circuit selon l'invention,
- la figure 2 représente un premier mode de réalisation d'une architecture de circuit selon l'invention,
- la figure 3 représente un deuxième mode de réalisation.

En revenant sur la figure 1 qui représente une architecture d'alimentation à découpage donnée à titre d'exemple illustrant bien l'utilité de l'invention, on a désigné la ligne du réseau public de distribution électrique par la référence 10 (secteur à 110 ou 220 volts, 50 à 60 hertz). Cette ligne est reliée à travers un filtre 12 à l'entrée d'un pont redresseur 14 dont la sortie est connectée d'une part à une masse électrique primaire, représentée partout par un triangle noire pointe en bas, et d'autre part à une extrémité de l'enroulement primaire EP du transformateur d'alimentation TA.

Un condensateur de filtrage 16 est placé en parallèle sur les sorties du pont redresseur 14. L'autre extrémité de l'enroulement primaire est reliée au collecteur d'un transistor de commutation TP dont l'émetteur est relié à la masse primaire par l'intermédiaire d'une petite résistance 18 de mesure de courant.

Le transformateur possède plusieurs enroulements secondaires qui sont de préférence isolés galvaniquement du secteur et reliés par exemple à une masse électrique secondaire isolée galvaniquement de la masse primaire.

Ici, chacun des enroulements secondaires a une extrémité reliée à la masse secondaire. L'autre extrémité alimente un condensateur de filtrage passe-bas respectif par l'intermédiaire d'une diode de redressement respective.

On s'intéressera dans la suite à un seul enroulement secondaire ES1, relié par une diode 20 à un condensateur 22. La tension de sortie continue de l'alimentation à découpage est la tension Vs aux bornes du condensateur 22 ; mais bien entendu d'autres tensions continues de sortie peuvent être obtenues aux bornes des autres condensateurs de filtrage reliés aux enroulements secondaires. Ces tensions de sortie constituent des tensions d'alimentation stabilisées pour des circuits d'utilisation non représentés. A titre d'exemple, un enroulement secondaire ES2 fournit une tension d'alimentation stabilisée de quelques volts pour le circuit intégré de régulation CI2 dont on a déjà parlé. On vérifie donc à ce propos que ce circuit n'est pas alimenté et ne peut donc pas fournir des signaux tant que l'alimentation à découpage ne fonctionne pas.

Il en est de même a priori pour le circuit intégré CI1 de commande de base du transistor de puissance TP, circuit qui est alimenté par une tension stabilisée fournie à partir d'un enroulement secondaire ES3, d'une diode 24 et d'un condensateur 26 (on remarquera en passant que cet enroulement, bien qu'étant un enroulement secondaire est relié à la masse primaire et non à la masse secondaire, ceci pour la raison bien simple que le circuit intégré CI1 est nécessairement couplé galvaniquement au primaire).

Cependant, comme il faut bien assurer un démarrage de l'alimentation à découpage, on prévoit que la borne d'alimentation 28 du circuit intégré CI1 est aussi reliée directement au secteur par l'intermédiaire d'une résistance élevée 30 et d'une diode 32 ; ceci est possible puisque le circuit intégré CI1 est relié à la masse primaire ; ce n'est pas possible pour le circuit intégré CI2 qui doit rester galvaniquement isolé du secteur. Dès que l'alimentation à découpage fonctionne normalement, la tension continue stabilisée issue de l'enroulement ES3 et de la diode 24 prend le pas sur la tension issue du secteur et de la diode 32 ; cette diode 32 se bloque et l'alimentation directe par le secteur n'intervient plus après la phase de démarrage initial.

On va maintenant préciser le rôle des circuits intégrés CI1 et CI2.

Le circuit de régulation CI2 reçoit d'un pont diviseur 34, placé aux bornes du condensateur 22 c'est-à-dire en sortie de l'alimentation stabilisée, une information sur la valeur de la tension à stabiliser Vs.

Cette information est comparée à une valeur de consigne et appliquée à un modulateur de largeur d'impulsions qui établit des créneaux périodiques de largeur variable en fonction de la valeur de la tension de sortie Vs : plus Vs est faible plus la largeur des créneaux sera grande.

Les créneaux sont établis à la fréquence de découpage de l'alimentation à découpage. Cette fréquence est donc établie du côté du secondaire du circuit ; elle est engendrée soit à l'intérieur du circuit CI2, soit à l'extérieur dans un circuit non représenté, sous forme d'une tension en dent de scie à la fréquence de découpage choisie. Cette tension en dent de scie est utilisée de manière connue pour effectuer la modulation de largeur.

Les créneaux de largeur variable, à la fréquence de découpage, sont appliqués à un enroulement primaire 36 d'un petit transformateur TX dont l'enroulement secondaire 38, isolé galvaniquement du primaire, fournit des impulsions positives et négatives aux fronts montants et descendants respectivement des créneaux de largeur variable.

Ce sont ces impulsions, de position et de fréquence déterminées par le circuit de régulation CI2, qui constituent des signaux de régulation appliqués à une entrée 40 du circuit de commande de base CI1.

Le transformateur TX est constitué par quelques spires de bobinage enroulées sur un bâtonnet de ferrite, les spires du primaire et les spires du secondaire étant suffisamment écartées les unes des autres pour respecter les normes d'isolation galvanique entre circuits primaires et circuits secondaires de l'alimentation à découpage.

Le circuit intégré de commande de base CI1 comporte diverses entrées parmi lesquelles on a déjà mentionné une entrée d'alimentation 28 et une entrée de signaux de régulation 40 ; une entrée de mesure de courant 44 est reliée à la résistance de mesure de courant 18 ; une entrée d'inhibition permettant de surveiller l'état de magnétisation d'un transformateur. Enfin, des entrées peuvent être prévues pour connecter des éléments (résistances, capacités) qui devraient faire partie du circuit intégré lui-même mais qui pour des raisons technologiques (encombrement) ou pour des raisons pratiques (possibilités de réglage par l'utilisateur) sont montés à l'extérieur.

Le circuit intégré CI1 comporte enfin une sortie 46 qui est destinée à être couplée par un couplage galvanique direct à la base du transistor de puissance Tp. Cette sortie fournit des créneaux de mise en conduction et de blocage du transistor Tp.

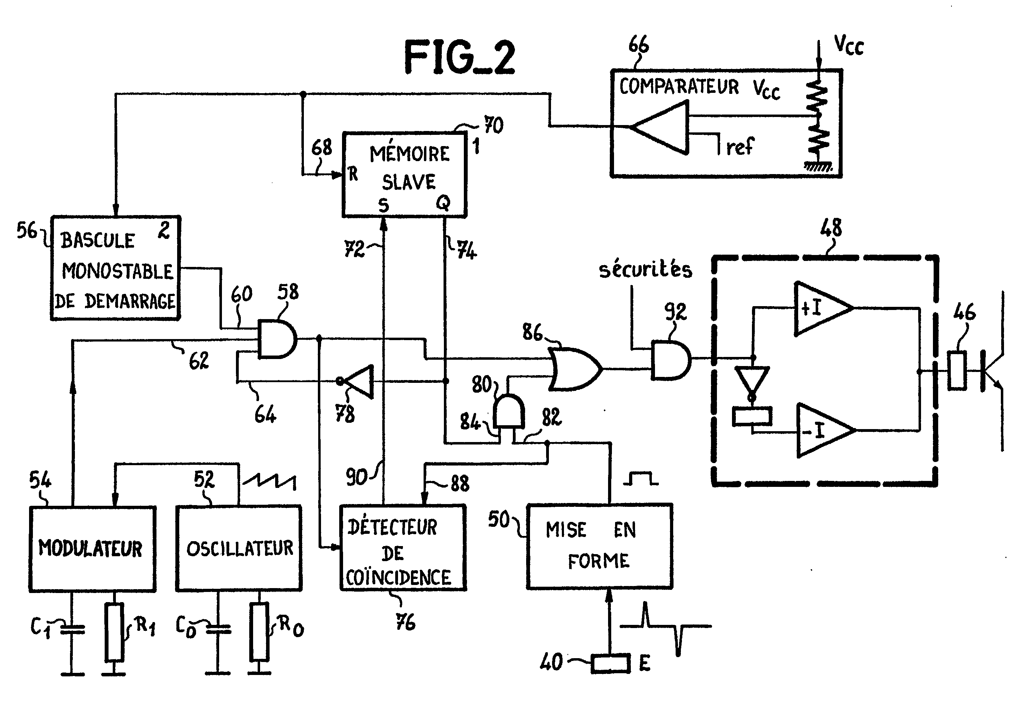

La figure 2 représente l'architecture générale du circuit intégré CI1, limitée aux éléments qui concernent plus spécialement l'invention.

La sortie 46 du circuit est la sortie d'un étage d'amplification push-pull globalement désigné par la référence 48, cet étage comprenant de préférence deux amplificateurs séparés dont l'un reçoit des créneaux de mise en conduction et l'autre reçoit des signaux de blocage constitués par les créneaux de mise en conduction inversés et retardés de quelques microsecondes. De tels amplificateurs sont maintenant bien connus.

Les signaux de commande de régulation issus du circuit CI2 arrivent sur une borne d'entrée 40. Ils sont traités par un circuit de mise en forme 50 qui établit des créneaux de mise en conduction débutant lors d'une impulsion positive et se terminant lors de l'impulsion négative immédiatement suivante. Ces créneaux sont donc synchronisés par les signaux de régulation.

Ces créneaux sont transmis à travers un certain nombre de portes logiques à l'entrée de l'amplificateur 48. Ces portes logiques ont pour fonction d'interdire le passage des créneaux ou de les autoriser, ou encore de laisser passer d'autres créneaux se substituant aux premiers.

Un oscillateur local 52, relié à une capacité Co et une résistance Ro extérieures au circuit intégré, produit des signaux à une fréquence voisine (de préférence légèrement plus faible) de la fréquence normale des signaux de régulation produits par le circuit CI2. La résistance et la capacité servent au réglage de la fréquence de l'oscillateur.

Ici l'oscillateur 52 est un oscillateur à relaxation fournissant des signaux en dents de scie.

Ces signaux sont appliqués à un modulateur de largeur d'impulsion 54 qui a pour fonction d'établir des créneaux de durée réglable et éventuellement variable ; ces créneaux ont la fréquence de l'oscillateur. Le modulateur 54 est relié à une résistance extérieure R1 servant au réglage de la durée des créneaux, et éventuellement à une capacité extérieure C1 servant à faire varier cette durée des créneaux; par exemple pendant une phase de démarrage, la capacité C1 peut, en se chargeant progressivement, faire varier d'une faible valeur à une plus forte valeur la durée des créneaux issus du modulateur 54. De tels modulateurs à variation progressive de durée de créneaux sont connus par exemple d'après le brevet US 3 959 714.

Les créneaux qui sont issus du modulateur 54 sont des créneaux de mise en conduction qui passent à travers l'ensemble de portes logiques déjà mentionnées et qui peuvent se substituer aux créneaux issus du circuit de mise en forme 50.

Une bascule monostable 56 définit une phase de démarrage initiale lors de la mise sous tension du circuit. En dehors de la phase de démarrage cette bascule interdit le passage des créneaux de mise en conduction issus du modulateur 54 et le commutateur Tp ne peut être fermé que par des créneaux issus du circuit de mise en forme 50.

Plus précisément, la sortie de la bascule 56 est reliée à une entrée 60 d'une porte ET 58 dont une autre entrée 62 est reliée à la sortie du modulateur 54. La porte ET comporte une troisième entrée 64 dont on expliquera la fonction plus loin.

L'entrée de la bascule monostable 56 provient de la sortie d'un comparateur à hystérésis 66 qui compare la tension d'alimentation Vcc (ou plus précisément une fraction de cette tension) à une valeur de seuil.

La bascule 56 délivre un créneau de sortie de durée fixe représentant la durée d'une phase de démarrage lorsque le comparateur indique que la tension d'alimentation a dépassé une première valeur de seuil après être descendu au-dessous d'une deuxième valeur de seuil plus faible que la première; en pratique la bascule 56 délivre ce créneau lors d'une remise sous tension du circuit après une interruption de durée non négligeable de son alimentation.

La sortie du comparateur à hystérésis 66 est également appliquée à l'entrée de rétablissement 68 d'une bascule bistable 70 qui comporte par ailleurs une entrée de basculement 72 et une sortie 74.

La sortie passe à un niveau logique haut lorsqu'elle reçoit un signal de basculement issu d'un détecteur de coïncidence 76.

Elle passe au contraire à un niveau logique bas lorsqu'elle reçoit un signal de rétablissement sur son entrée 68 ; ce signal de rétablissement apparait lors de la remise sous tension du circuit après une interruption prolongée ; la sortie de la bascule bistable 70 passe donc au niveau bas en même temps que commence la phase initiale de démarrage.

Elle repasse au niveau haut lorsque le détecteur de coïncidence 76 indique qu'il y a en quelque sorte synchronisme entre les créneaux issus du modulateur de largeur 54 et les créneaux issus du circuit de mise en forme 50. On explicitera ce point plus loin.

La bascule 70 agit de deux manières :
- lorsque sa sortie est au niveau haut elle interdit la transmission de créneaux issus du modulateur de largeur, car sa sortie 74 est reliée par l'intermédiaire d'un inverseur 78 à la troisième entrée 64 de la porte ET 58. Par conséquent, une fois qu'on a détecté la coïncidence entre les créneaux issus du modulateur et ceux issus du circuit de mise en forme 50, seuls les créneaux issus du circuit de mise en forme peuvent être transmis à l'amplificateur 48 ; la disparition de la coïncidence ne modifie pas cet état de fait et seule une remise sous tension du circuit permet de rouvrir la porte ET 58 ;
- lorsque la sortie de la bascule 70 est au niveau bas (au moment d'une remise sous tension et avant apparition d'une coïncidence des créneaux), elle interdit le passage des créneaux issus du circuit de mise en forme 50 ; ce n'est qu'après détection de la coïncidence qu'elle l'autorise. Pour cela une porte ET 80 reçoit sur une entrée 82 les créneaux issus du circuit de mise en forme et sur une entrée 84 la sortie de la bascule 70.

Une porte OU 86 reçoit sur une entrée la sortie de la porte ET 58 et sur une autre entrée la sortie de la porte ET 80.

Si la porte ET 58 est ouverte (depuis le début de la phase de démarrage initial jusqu'à la détection de coïncidence, à condition que cette détection ait lieu pendant la durée de démarrage fixée par la bascule monostable 56), ce sont les créneaux issus de l'oscillateur 52 et du modulateur 54 qui sont transmis par la porte OU 86 vers l'amplificateur 48.

Si la porte ET 80 est ouverte (dès la détection de coïncidence) ce sont les créneaux synchronisés par les signaux de régulation qui sont transmis par la porte OU 86 vers l'amplificateur 48.

Les portes ET 80 et 58 ne peuvent pas être ouvertes en même temps. Elles peuvent être fermées en même temps (et dans ce cas aucune mise en conduction n'est plus possible jusqu'à une remise sous tension du circuit) si la détection de coïncidence ne se produit pas pendant la phase de démarrage de durée imposée par la bascule monostable.

Le détecteur de coïncidence 76 reçoit sur une entrée 88 les créneaux issus du circuit de mise en forme 50, et sur une entrée 90 la sortie de la porte ET 58. comme la porte ET 58 ne fournit des créneaux que pendant la phase de démarrage (elle est inhibée par la bascule 56 en dehors de cette phase), la détection de coïncidence ne peut avoir lieu que pendant cette phase.

On peut prévoir par exemple que le détecteur de coïncidence fournit un signal de basculement de la bascule 70 lorsqu'un créneau (ou des créneaux successifs) issu du circuit de mise en forme apparaît pendant un créneau issu du modulateur 54 et a une durée légèrement plus faible.

Pour terminer la description de la figure 2 on peut prévoir une porte ET 92 recevant sur une entrée la sortie de la porte OU 86 et sur d'autres entrées des signaux d'inhibition issus de divers circuits de sécurité. C'est la sortie de la porte ET 92 qui est reliée à l'entrée de l'amplificateur 48 et les créneaux de mise en conduction ne sont pas transmis si des conditions de sécurité ne sont pas remplies (surtension, surintensités, tension d'alimentation trop faible, etc...).

Avec le schéma de la figure 2, on peut vérifier que :

1) après une phase de démarrage réussie, si des signaux de régulation sont présents, l'alimentation à découpage fonctionne ; si ces signaux disparaissent le découpage s'arrête ; si les signaux de régulation réapparaissent, le découpage reprend immédiatement, directement synchronisé par les signaux de régulation,

2) au démarrage les créneaux de substitution, engendrés localement par l'oscillateur 52 et le modulateur 54, sont seuls admis, jusqu'à ce que l'apparition de signaux de régulation appropriés (détection de coïncidence) montre que le démarrage a réussi.

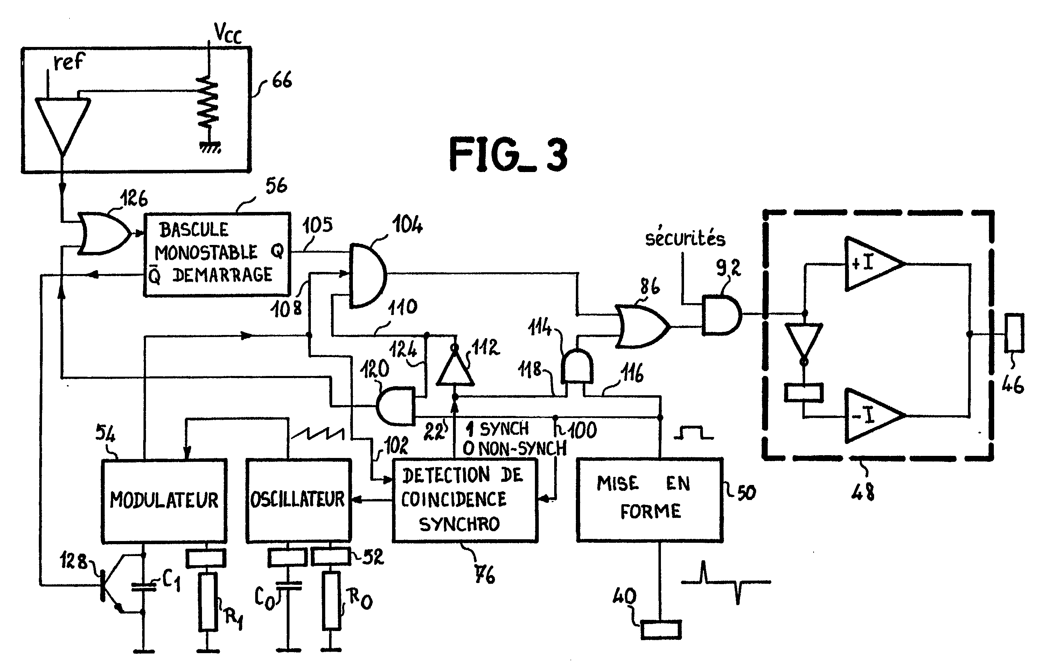

La figure 3 représente un autre mode de réalisation de l'invention, dans lequel les mêmes fonctions sont accomplies, mais, lorsque les signaux de régulation ont disparu et réapparaissent à nouveau, le découpage reprend non pas directement en synchronisme avec les signaux de régulation, mais progressivement avec le modulateur qui produit des créneaux de mise en conduction de durée faible puis progressivement croissante ; une détection de coïncidence est encore effectuée pour déterminer le moment du remplacement des créneaux du modulateur par les créneaux du circuit de mise en forme.

Plusieurs éléments de la figure 3 sont identiques à des éléments correspondants de la figure 2 et on a conservé les mêmes références ; ce sont les éléments suivants :
- l'amplificateur 48 relié à la borne extérieure 46,
- le circuit de mise en forme 50 recevant les signaux de régulation de la borne 40,
- l'oscillateur 52 et ses éléments extérieurs Ro et Co,

- le modulateur de largeur 54 et ses éléments extérieures R1 et C1,
- la bascule monostable de démarrage 56 ; elle est non redéclenchable, en ce sens qu'elle établit une durée fixe de basculement après la première impulsion de basculement qu'elle reçoit même si d'autres impulsions arrivent pendant cette durée,
- le comparateur à hystérésis 66 détectant une remise sous tension du circuit après une interruption d'alimentation,
- le détecteur de coïncidence 76, qui reçoit maintenant directement sur une entrée 100 les créneaux issus du circuit de mise en forme 50 et sur une entrée 102 les créneaux issus du modulateur,
- la porte OU 86 qui laisse passer les créneaux arrivant sur ses entrées, qu'ils viennent du modulateur ou du circuit de mise en forme,
- la porte ET 92, en sortie de la porte OU 86, cette porte ET ayant des entrées d'inhibition pour empêcher la mise en conduction du commutateur en cas de conditions de fonctionnement anormales (surtensions, surintensités...).

Les portes logiques reliant ces différents éléments sont les suivantes : une porte ET 104 à trois entrées 106, 108, 110 ; l'entrée 108 reliée à la sortie du modulateur 54 reçoit les créneaux issus du modulateur ; l'entrée 106 reliée à la sortie de la bascule 56 interdit leur passage en dehors de la phase initiale de démarrage (à noter que cette phase a lieu non seulement à la remise sous tension du circuit mais à chaque réapparition de signaux de régulation faisant suite à une disparition de ces signaux).

L'entrée 110 reliée par un inverseur 112 à la sortie du détecteur de coïncidence 76 permet d'interdire le passage des créneaux issus du modulateur lorsqu'une coïncidence est détectée.

La sortie de la porte ET 104 est reliée à une entrée de la porte OU 86.

Une autre entrée de la porte OU 86 reçoit la sortie d'une porte ET 114 ayant deux entrées 116 et 118. L'entrée 116 reliée à la sortie du circuit de mise en forme 50 reçoit les créneaux issus de ce circuit. L'entrée 118 reliée à la sortie du détecteur de coïncidence interdit le passage des créneaux lorsqu'il n'y a pas coïncidence.

Une porte ET 120 reçoit également sur une entrée 122 les créneaux issus du circuit de mise en forme 50 ; l'autre entrée est reliée à la sortie de l'inverseur 112 et ouvre donc la porte ET 120 lorsque des signaux de régulation apparaissent sans qu'il y ait encore coïncidence avec les créneaux locaux issus du modulateur. Cette ouverture déclenche la bascule monostable 56 par l'intermédiaire d'une porte OU 126 qui permet par ailleurs un déclenchement de la bascule par le comparateur à hystérésis 66.

Enfin un transistor 128 connecté en parallèle sur le condensateur C1 et commandé par une sortie de la bascule monostable 56, permet de court-circuiter le condensateur en dehors des phases de démarrage définies par la bascule ; la charge du condensateur est libre et progressive pendant les phases de démarrage, ce qui assure de manière classique le démarrage progressif par augmentation de la durée des créneaux issus du modulateur.

Le fonctionnement de ce circuit est le suivant :

1) remise sous tension après un arrêt prolongé ; il n'y a pas de signaux de régulation au départ ou en tout cas pas de coïncidence ; la porte ET 104 transmet les créneaux progressivement croissants du modulateur ; lorsque des créneaux de régulation apparaissent en sortie du circuit 50 ils ne passent pas à travers la porte OU 114 car celle-ci est bloquée. Mais lorsqu'une coïncidence est détectée entre ces créneaux et ceux qui sont issus du modulateur 54, le détecteur de coïncidence ferme les portes 104 et 120 et ouvre la porte 114

2) lors d'une disparition de signaux de régulation sur l'entrée 40, le détecteur de coïncidence ferme la porte 114, ouvre la porte 120, et cesse d'inhiber la porte 104 (sans toutefois l'ouvrir car elle est bloquée par la bascule 56). Aucun créneau n'est transmis à l'amplificateur 46. En même temps le condensateur C1 est court-circuité.

Dans ces conditions, deux situations sont possibles :

a) le montage de l'alimentation à découpage est tel que des signaux ne peuvent plus apparaitre sur l'entrée 40 car le découpage est complètement arrêté. Cela peut être le cas en particulier lorsque le circuit qui émet les signaux de régulation n'est pas alimenté de manière autonome par un transformateur auxiliaire. Dans ce cas, le redémarrage du découpage n'est possible que par une remise sous tension générale du circuit.

b) le montage est tel que des signaux de régulation peuvent à nouveau apparaitre sur l'entrée 40. Dans ce cas, ces signaux mis en forme par le circuit 50 viennent déclencher la bascule monostable 56 à travers la porte ET 120 et la porte OU 126. La bascule ouvre alors pendant une durée de démarrage la porte ET 104, en même temps qu'elle bloque le transistor 128 et libère donc la charge du condensateur C1. Le modulateur se met à produire des créneaux progressivement croissants qui sont transmis à l'amplificateur 48 et au commutateur principal. Il y a donc redémarrage, mais progressivement (contrairement au cas de la figure 2).

Le circuit intégré de commande selon l'invention a l'avantage de permettre une interruption totale très facile du découpage si le circuit de régulation placé du côté du secondaire du transformateur cesse de produire des signaux de régulation. On pourra s'arranger en particulier pour que le circuit de régulation cesse cette production en cas d'anomalie de fonctionnement du côté du secondaire, ou tout simplement en cas de mise en veille volontaire de l'alimentation (application à un téléviseur télécommandé par exemple) lorsqu'il y a un transformateur auxiliaire d'alimentation. Si une anomalie de fonctionnement se produit du côté du primaire, l'arrêt du découpage se fera directement (porte ET 92) sur le circuit de commande du primaire.

## Revendications

1. Circuit intégré de commande d'alimentation à découpage (Cl1) destiné à recevoir des signaux périodiques de commande de régulation, et à fournir des créneaux de commande de mise en conduction d'un commutateur (Tp) en série avec l'enroulement primaire (EP) d'un transformateur, les signaux de commande de régulation étant engendrés par un circuit alimenté en énergie à partir d'un enroulement secondaire (ES1) du transformateur et étant transmis au circuit intégré de commande de base par l'intermédiaire d'un élément de transmission sans couplage galvanique (TX), caractérisé en ce qu'il comporte une borne d'entrée (40) pour les signaux de commande de régulation, et des moyens pour:
– pendant une phase initiale de démarrage suivant la mise sous tension du circuit, élaborer des créneaux de commande de mise ne conduction indépendamment de la présence de signaux de régulation sur la borne d'entrée,
– après une phase de démarrage, élaborer des créneaux de commande synchronisés par les signaux de régulation lorsque ces signaux sont présents
– interrompre les créneaux de commande synchronisés lors de la disparition des signaux de régulation,
– élaborer à nouveau des créneaux de commande synchronisés de mise en conduction lors de la réapparition de signaux de régulation après une disparition.

2. Circuit selon la revendication 1, caractérisé en ce que pour élaborer à nouveau les créneaux de commande de mise en conduction lors de la réapparition de signaux de régulation, on déclenche d'abord une phase de démarrage pendant laquelle des créneaux de commande de mise en conduction sont élaborés indépendamment de la présence de signaux de régulation, puis on élabore, après cette phase de démarrage, des créneaux de commande de mise en conduction synchronisés avec les signaux de régulation.

3. Circuit selon la revendication 1, caractérisé en ce qu'il comporte un premier moyen (50) de production de créneaux de mise en conduction synchronisés par les signaux de régulation lorsqu'ils sont présents sur la borne d'entrée (40), un deuxième moyen (52, 54) de production de créneaux de mise en conduction non synchronisés par les signaux de régulation, un moyen d'inhibition (56, 58) pour interdire la transmission au commutateur des créneaux du deuxième moyen en dehors d'une phase initiale de démarrage, un moyen logique (70, 76, 80) qui, pendant la phase de démarrage, interdit la transmission au commutateur (Tp) des créneaux de mise en conduction du premier moyen, et qui, après une phase de démarrage réussie, autorise la transmission au commutateur des créneaux du premier moyen.

4. Circuit selon la revendication 1, caractérisé en ce qu'il comporte un premier moyen (50) de production de créneaux de mise en conduction synchronisés par les signaux de régulation lorsqu'ils sont présents sur la borne d'entrée (40), un deuxième moyen (52, 54) de production de créneaux de mise en conduction non synchronisés par les signaux de régulation, un détecteur de coïncidence (76) détectant la coïncidence des créneaux du premier moyen et du deuxième moyen, une bascule monostable (56) établissant la phase de démarrage, et une porte logique (120) fournissant un signal de déclenchement de la bascule lorsqu'il y a simultanément absence de coïncidence détectée et apparition de signaux de régulation sur la borne d'entrée (40).

5. Circuit selon la revendication 4, caractérisé en ce que le deuxième moyen comprend un modulateur de largeur de créneaux (54) associé à un moyen (R1, C1) d'augmentation progressive de la durée des créneaux pendant la phase de démarrage.

## Patentansprüche

1. Integrierte Steuerschaltung (Cl1) für eine geschaltete Stromversorgungsschaltung, die dazu dient, periodische Regel-Befehlssignale zu empfangen und Befehlsrechteckssignale zu liefern, die einen Schalter (Tp) leitend machen, der mit der Primärwicklung (EP) eines Transformators in Reihe liegt, wobei die Regel-Befehlssignale von einer Schaltung, die von einer Sekundärwicklung (ES1) des Transformators mit Energie versorgt wird, erzeugt und zur integrierten Grund-Steuerschaltung vermittels eines Übertragungselementes (TX) ohne galvanische Kopplung übertragen werden, dadurch gekennzeichnet, daß sie einen Eingangsanschluß (40) für die Regel-Befehlssignale und Mittel für folgende Zwecke umfaßt:
– Während einer Anfangsphase des Anlaufens, die dem Anlegen von Spannung folgt, Befehls-Rechteckssignale zum Leitendmachen unabhängig vom Vorhandensein von Regelsignalen am Eingangsanschluß zu erzeugen,
– nach einer Anlaufphase Rechtecks-Befehlssignale zu erzeugen, die mit den Regelsignalen synchronisiert sind, wenn diese Signale vorhanden sind,
– die synchronisierten Befehls-Rechteckssignale zu unterbrechen, wenn die Regelsignale verschwinden,
– erneut synchronisierte Befehls-Rechteckssignale zum Leitendmachen zu erzeugen, wenn die Regelsignale nach ihrem Verschwinden wieder erscheinen.

2. Schaltung nach Anspruch 1, dadurch gekennzeichnet, daß zum erneuten Erzeugen der Befehls-Rechteckssignale für ein Leitendmachen beim Wiedererscheinen der Regelsignale zunächst eine Anlaufphase ausgelöst wird, während der die Befehls-Rechteckssignale zum Leitendmachen unabhängig vom Vorhandensein der Regelsignale erzeugt werden, und daß dann, nach dieser Anlaufphase, die Befehls-Rechteckssignale zum Leitendmachen in Synchronisation mit den Regelsignalen erzeugt werden.

3. Schaltung nach Anspruch 1, dadurch gekennzeichnet, daß sie folgende Bestandteile umfaßt:
Eine erste Einrichtung (50) zur Erzeugung von Rechtecksignalen zum Leitendmachen, die mit den Regelsignalen synchronisiert sind, wenn diese am Eingangsanschluß (40) vorhanden sind, eine zweite Einrichtung (52, 54) zur Erzeugung von Rechteckssignalen für das Leitendmachen, die mit den Regelsignalen nicht synchronisiert sind, eine Sperreinrichtung (56, 58) zum Unterbinden der Übertragung der Rechtecksssignale der zweiten Einrichtung zum Schalter außerhalb einer Anfangsphase des Anlaufens, eine logische Einrichtung (70, 76, 80), die während der Anlaufphase die Übertragung der Rechtecksssignale zum Leitendmachen der ersten Einrichtung zum Schalter (Tp) untersagt und die nach einer gelungenen Anlaufphase die Übertragung der Rechtecksssignale der ersten Einrichtung zum Schalter erlaubt.

4. Schaltung nach Anspruch 1, dadurch gekennzeichnet, daß sie folgende Bestandteile umfaßt:
Eine erste Einrichtung (50) zum Erzeugen von Rechtecksssignalen zum Leitendmachen, die mit den Regelsignalen synchronisiert sind, wenn diese am Eingangsanschluß (40) vorhanden sind, eine zweite Einrichtung (52, 54) zur Erzeugung von Rechtecksssignalen zum Leitendmachen, die mit den Regelsignalen nicht synchronisiert sind, einen Koinzidenz-Detektor (76), der die Koinzidenz der Rechtecksssignale der ersten Einrichtung und der zweiten Einrichtung detektiert, ein Monoflop (56), das die Anlaufphase etabliert, und ein Logikgatter (120), das ein Triggersignal für das Monoflop liefert, wenn gleichzeitig die detektierte Koinzidenz fehlt und Regelsignale am Eingangsanschluß (40) auftreten.

5. Schaltung nach Anspruch 4, dadurch gekennzeichnet, daß die zweite Einrichtung einen Breitenmodulator (54) für die Rechtecksssignale umfaßt, dem eine Einrichtung (R1, C1) beigeordnet ist, die dazu dient, die zeitliche Dauer der Rechtecksssignale während der Anlaufphase fortschreitend zu vergrößern.

**Claims**

1. An integrated control circuit for a switching power supply (CI1) adapted to receive periodic control signals and to supply square waves for controlling the switching on of a commutator (Tp) which is in series with the primary winding (EP) of a transformer, the control signals being produced by a circuit supplied with energy from a secondary winding (ES1) of the transformer and being transmitted to the integrated circuit to control the base by means of a transmission element without galvanic coupling (TX), characterized in that it comprises an input terminal (40) for the control signals and means:
– to produce, during an initial starting phase following the application of a voltage to the circuit, square waves for controlling switching on independently of the presence of control signals on the input terminal,
– to produce, after a starting phase, square control waves synchronized by the control signals when these signals are present,
– to interrupt the synchronized square control waves when the control signals are no longer present,
– to recommence production of synchronized square waves for controlling switching on when the control signals reappear after they have ceased.

2. A circuit according to claim 1, characterized in that in order to recommence production of square waves for controlling switching on when the control signals reappear, initially a starting phase is triggered during which the square waves for controlling switching on are produced independently of the presence of control signals, then, after this starting phase, square waves for controlling switching on are produced which are synchronized with the control signals.

3. A circuit according to claim 1, characterized in that it comprises a first means (50) for producing square waves for controlling switching on which are synchronized by the control signals when they are present on the input terminal (40), a second means (52, 54) for producing square waves for controlling switching on which are not synchronized by the control signals, an inhibitory means (56, 58) to prevent transmission to the commutator of the square waves from the second means outside an initial starting phase, and a logic means (70, 76, 80) which, during the starting phase, prevents transmission to the commutator (Tp) of the square waves for controlling switching on which are produced by the first means, and which, after a successful starting phase, allows transmission to the commutator of the square waves from the first means.

4. A circuit according to claim 1, characterized in that it comprises a first means (50) for producing square waves for controlling switching on which are synchronized by the control signals when they are present on the input terminal (40), a second means (52, 54) for producing square waves for controlling switching on which are not synchronized by the control signals, a coincidence detector (76) which detects the coincidence of the square waves from the first means and from the second means, a monostable multivibrator (56) which establishes the starting phase, and a logic gate (120) which supplies a signal for triggering the multivibrator when, simultaneously, coincidence is not detected and control signals are received at the input terminal (40).

5. A circuit according to claim 4, characterized in that the second means comprises a modulator of the width of square waves (54) associated with a means (R1, C1) for progressively increasing the duration of the square waves during the starting phase.

FIG_1

# FIG_2

COMPARATEUR $V_{cc}$

66

$V_{cc}$

ref

70
68

MÉMOIRE SLAVE 1

R

S    Q

72    74

sécurités

92

48

+I

-I

46

56  BASCULE MONOSTABLE DE DEMARRAGE 2

60    58

62

64

78

80

86

84    82

90    88

54    52

MODULATEUR

OSCILLATEUR

DÉTECTEUR DE COÏNCIDENCE

50    MISE EN FORME

$C_1$    $R_1$

$C_0$    $R_0$

76

40    E

EP 0 196 934 B1

# FIG_3